# EUROPÄISCHE PATENTSCHRIFT

(11) **EP 0 862 849 B1**
(45) Veröffentlichungstag und Bekanntmachung des Hinweises auf die Patenterteilung: **31.07.2002**
(21) Anmeldenummer: 98103560.3
(22) Anmeldetag: 28.02.1998
(51) Int. Cl.: A01F 12/30, A01D 61/00

(54) **Gutbearbeitungsvorrichtung**
Device for the treatment of crop
Dispositif pour le traitement de récolte

(30) Priorität: 07.03.1997 DE 19709398
(43) Veröffentlichungstag der Anmeldung: 09.09.1998
(73) Patentinhaber: DEERE & COMPANY, Moline, Illinois 61265-8098 (US)
(72) Erfinder: Perez-Lopez, Antonio, 66497 Contwig (DE)
(74) Vertreter: Magin, Ludwig Bernhard

(56) Entgegenhaltungen:
- EP-A- 0 567 192
- DE-A- 2 431 588
- FR-A- 2 029 698
- FR-A- 2 075 322
- FR-A- 2 222 009
- FR-A- 2 232 911
- FR-A- 2 304 275
- FR-A- 2 342 022
- GB-A- 2 095 964
- US-A- 2 706 032

## Beschreibung

Die Erfindung betrifft eine Gutbearbeitungsvorrichtung bestehend aus einem Rotorgehäuse, einer darin exzentrisch gelagerten Achse und auf der Achse drehbar gelagerten und durch das Rotorgehäuse ragenden Mitnehmern, deren axiale Position veränderbar ist.

Die DE 1 904 406 A offenbart einen Mähdrescher mit einem unterschlächtig fördernden Zinkenrotor oberhalb von Strohschüttlern. Dieser Zinkenrotor setzt sich aus einem Rotorgehäuse, einer darin exzentrisch gelagerten Achse und auf der Achse drehbar gelagerten und sich durch die Wandung des Rotorgehäuses erstreckenden Zinken zusammen. Während der Drehung des Rotorgehäuses werden die an der Unterseite des Rotorgehäuses am weitesten herausragenden Zinken in der Förderrichtung der Strohschüttler bewegt und reißen die Strohmatte auseinander, wodurch eine Erhöhung der Abscheidung noch im Stroh befindlicher Körner stattfindet. Zur Steigerung der Abscheidung sind die Zinken entweder über Taumelscheiben auf der Achse befestigt, oder die Achse wird mittels eines Exzentermotors ständig axial bewegt. Auf diese Weise bewegen sich die freien Zinkenenden auch in der Axialrichtung des Rotors und reißen die Strohmatte noch weiter auseinander.

Aus der DE 22 35 061 A geht ein Mähdrescher hervor, in dessen Bereich zwischen Strohschüttlern und einer Strohhaube sich ein Pick-up-ähnlicher Überkopfförderer befindet. Dieser Überkopfförderer nimmt in einem vorderen Bereich der Strohschüttler Stroh auf und gibt es dahinter wieder ab. In dem darunter befindlichen Bereich kann das Kurzstroh abgeschieden werden. Der Überkopfförderer kann auch im Anschluß an einen Schüttler vorgesehen werden. Eine ähnliche Vorrichtung ist auch aus der FR 1 473 891 A und der DE 2 103 981 B bekannt, wobei die Vorrichtung nach der letztgenannten Schrift zusätzlich in eine Außerbetriebsstellung gebracht werden kann.

Gemäß der GB 698 324 A ist oberhalb von Strohschüttlern ebenfalls ein Überkopfförderer vorgesehen, der aus einer Trommel und darauf nachlaufend ausgerichteten Zahnleisten besteht.

Die DE 2 431 588 A lehrt einen Zusatzabscheider im Abgabebereich der Dreschvorrichtung eines Mähdreschers, der auf einem Rotor beweglich bzw. federnd gelagerte Zinken aufweist, die das Erntegut unterschlächtig fördern. Die Zinken sind zwar nachgiebig, erstrecken sich aber stets mit ihrer vollen Länge in das Erntegut. Es wird auch vorgeschlagen, mehrere derartige Zusatzabscheider hintereinander vorzusehen.

Der DE 42 09 020 C zufolge wird eine Überkopf fördernde Abscheidetrommel zwischen eine Dreschvorrichtung und Strohschüttler eingefügt, die das aus der Dreschvorrichtung kommende gedroschene Gut auffängt und abbremst, so daß in dem Gutgemenge enthaltene Körner auf der Oberfläche der Abscheidetrommel zu liegen kommen, während das Stroh auf die Strohschüttler weitergegeben wird.

Die DE 41 27 118 A zeigt einen Mähdrescher mit Strohschüttlern und einem sich oberhalb von diesen befindlichen sogenannten Querschüttler, der das Erntegut unterschlächtig fördert. Vor dem Querschüttler ist ein ebenfalls unterschlächtig förderndes Zinkenband vorgesehen, das die Gutmatte aufreißt und mit hoher Geschwindigkeit in den Spalt zwischen den Querschüttler und den Strohschüttler einwirft.

In der US 2 706 032 A ist ein Schneidwerk für einen Mähdrescher beschrieben, bei dem im mittleren Bereich eines einem Messerbalken nachgeordneten Schneckenförderers ein zylindrischer Abschnitt ohne Förderwindungen vorgesehen ist. Dieser mittlere Abschnitt ist mit Fingern ausgestattet, die auf einer exzentrischen Achse mit verstellbarem Rotationswinkel angeordnet sind. Die Finger sind mit ihrem inneren Ende an plattenförmigen Elementen befestigt und erstrecken sich durch Schlitze des zylindrischen Abschnitts. Die plattenförmigen angeordnet sind. Die Finger sind mit ihrem inneren Ende an plattenförmigen Elementen befestigt und erstrecken sich durch Schlitze des zylindrischen Abschnitts. Die plattenförmigen Elemente sind durch Muttern an der mit einem Gewinde versehenen Achse festgelegt. Die plattenförmigen Elemente und die Finger sind auf diese Weise zwar in axialer Richtung verstellbar, jedoch müssen die Platten einzeln auf der Achse verschoben werden.

Das der Erfindung zugrunde liegende Problem wird darin gesehen, daß insbesondere bei Mähdreschern mit einer großen Durchsatzleistung noch keine voll befriedigende zusätzliche Gutbearbeitungsvorrichtung gefunden ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise findet trotz der axialen Festlegung der Achse und der inneren Enden der Mitnehmer auf dieser eine Axialbewegung der freien Mitnehmerenden während der Drehbewegung des Rotorgehäuses statt, solange die Mitnehmer nicht radial, sondern zu der Rotationsachse und der radialen Ebene durch diese geneigt verlaufen. Diese Schwenkbewegung hat ihren Grund darin, daß sich infolge der radialen Relativbewegung der Achse im Innern des Rotorgehäuses die Winkel eines Dreiecks zwischen der Anschlußstelle des Mitnehmers an der Achse, dessen Austrittsstelle in dem Rotorgehäuse und einer Radialen durch die Austrittsstelle ständig ändern. Es zeigt sich somit, daß mit einem unkomplizierten Aufbau, d. h. ohne Taumelscheiben und ohne eine Axialbewegung der Achse eine Seitwärtsbewegung des Förderguts bewirkt werden kann. Es tritt folglich eine beträchtliche Kostenersparnis und Zuverlässigkeitssteigerung gegenüber dem Bekannten ein. Weiterhin ist es mit dieser Gutbearbeitungsvorrichtung möglich, durch eine entsprechende Neigung der Mitnehmer, d. h. Stellung der Achse, eine Seitwärtsbewegung des Gutes zu bewirken, so daß eine Anhäufung auf einer Seite, z. B. beim Einsatz am Hang, vermieden oder abgebaut werden kann.

Bei einer unterschlächtigen Förderung durch die Gutbearbeitungsvorrichtung bildet ein diese wenigstens teilweise umgebendes Gehäuse oder ein ihr gegenüberliegender Boden, z. B. Schüttlerbeläge, eine Anlage für das Fördergut, die ein Gegenlager für die sich bewegenden Mitnehmer bieten, so daß der Gutteppich umso mehr aufgerissen wird. Im Vergleich zu den bekannten Vorrichtungen beeinträchtigt die vorliegende Erfindung die strohqualität wesentlich weniger, weil die Seitwärtsbewegung nicht so intensiv ist.

Bei einer oberschlächtigen Förderung tritt eine Lockerung bei noch weitergehender Schonung des Förderguts auf, die bei den meisten Fördergütern eine noch bessere Abscheidung bewirkt.

Wenn die Mitnehmer in Reihen mit unterschiedlichen und zueinander versetzten Lagerstellen auf der Achse oder in der Umfangswand des Rotorgehäuses angeordnet sind, ergibt sich eine kreuzweise Anordnung der Mitnehmer auf dem Rotorgehäuse, die ein Auseinanderziehen und ein nachfolgendes Zusammenschieben des Ernteguts hervorrufen, was die Abscheideleistung weiter erhöht.

Wenn die Stellung der Mitnehmer in radialer wie auch in umfänglicher Richtung veränderbar ist, ist eine Anpassung an jeweils vorgefundene Erfordernisse oder Fördergegebenheiten möglich. Durch die Veränderung der radialen Stellung kann die Förderaggresivität der Mitnehmer verändert werden.

Auf eine einfache Weise kann die Neigung der Mitnehmer dadurch verändert werden, daß ein Teil der Achse axial beweglich in deren anderen Teil gelagert ist, wozu beide sinnvollerweise als Winkelhebel ausgebildet sind, die die Exzentrizität der Achse bestimmen.

Nach einem anderen Ausführungsbeispiel kann die Achse aber auch einteilig ausgebildet sein und durch oder in zwei Lagern insgesamt axial verschoben werden. Diese Ausbildung ist noch weniger aufwendig und ist dort anwendbar, wo ausreichend Platz für das betreffende Ende der Achse zur Verfügung steht.

Zur Verstellung der Neigung der Mitnehmer ist eine Stellvorrichtung vorgesehen, die entweder stufenlos oder in Stufen die Achse und somit die Mitnehmer verstellt, was sowohl fernsteuerbar als auch unmittelbar manuell erfolgen kann. Bei einer Steuerung mittels einer Steuer- oder Regelvorrichtung kann die Zusammensetzung des Guts und/oder dessen Verteilung auf der Förderfläche als Indikator für das Erfordernis eines Neigungswechsels der Mitnehmer gewählt werden.

Unter den vielfältigen Einsatzmöglichkeiten dieser Gutbearbeitungsvorrichtung sind die in einem Mähdrescher gegebenen sehr günstig, weil dort eine hohe Abscheideleistung erforderlich ist. So befinden sich in dem auf den Schüttlern geförderten Stroh noch genügend Körner, deren Abscheidung erforderlich ist.

Die Anordnung der Gutbearbeitungsvorrichtung zwischen einer Dreschvorrichtung und Strohschüttlern eines Mähdreschers bewirkt, daß eine Ansammlung auf einer Seite vermieden oder beseitigt wird, was umso vorteilhafter ist, als dies der frühestmögliche Zeitpunkt hinter der Dreschvorrichtung hierfür ist. Dadurch werden die negativen Folgen im weiteren Gutverlauf reduziert.

Die Anordnung der Gutbearbeitungsvorrichtung vor den Strohschüttlern, d. h. auch möglichst hinter der Wendetrommel kann so gewählt werden, daß sie das Fördergut direkt von der Wendetrommel abstreift und somit einer ungewollten Mitnahme durch diese vorbeugt.

Eine weitere Kosteneinsparung wird dadurch bewirkt, daß die Gutbearbeitungsvorrichtung an die Stelle einer herkömmlichen Wendetrommel in einem Mähdrescher tritt. Dies ist aufgrund der ausgezeichneten Fördereigenschaft der Gutbearbeitungsvorrichtung möglich, und es tritt ein weiterer Vorteil hinzu, nämlich der, daß das Erntegut auch seitlich bewegt werden kann.

Um einer ungleichmäßigen Verteilung des Förderguts noch früher zu begegnen, kann die Gutbearbeitungsvorrichtung auch bereits in dem aufnahmeseitigen Bereich eines Schrägförderers vorgesehen werden, wo für eine gleichmäßige Verteilung über die Breite vor und eine gleichförmige Zufuhr zu der Dreschvorrichtung gesorgt wird.

Die Axialbewegung in einer Erntegut zusammenführenden Einzugsschnecke in einem Schneidwerk, einer Pick-Up oder dergleichen wird durch die erfindungsgemäße Gutbearbeitungsvorrichtung noch erhöht, weil sie zusätzlich zu den Schneckenwendeln wirkt.

Der Gutfluß von einer Dreschvorrichtung zu Schüttlern wird sicher geleitet und eine frühzeitige Auflockerung des Förderguts tritt ein, wenn in diesem Bereich zwei in entgegengesetzter Richtung drehende Rotorgehäuse mit Fingern vorgesehen werden.

In der Zeichnung sind zwei nachfolgend näher beschriebene Ausführungsbeispiele der Erfindung dargestellt. Es zeigt:
- Fig. 1: eine Erntemaschine mit einer erfindungsgemäßen Gutbearbeitungsvorrichtung,
- Fig. 2: die erfindungsgemäße Gutbearbeitungsvorrichtung nach einer ersten Ausführungsform in schematischer Darstellung,
- Fig. 3: die erfindungsgemäße Gutbearbeitungsvorrichtung nach einer zweiten Ausführungsform in schematischer Darstellung,
- Fig. 4: die Gutbearbeitungsvorrichtung eingebaut in der Erntemaschine oberhalb von Schüttlern,
- Fig. 5: die Gutbearbeitungsvorrichtung eingebaut in der Erntemaschine stromabwärts einer Wendetrommel,
- Fig. 6: die Gutbearbeitungsvorrichtung eingebaut in einem Schrägförderer einer Erntemaschine.

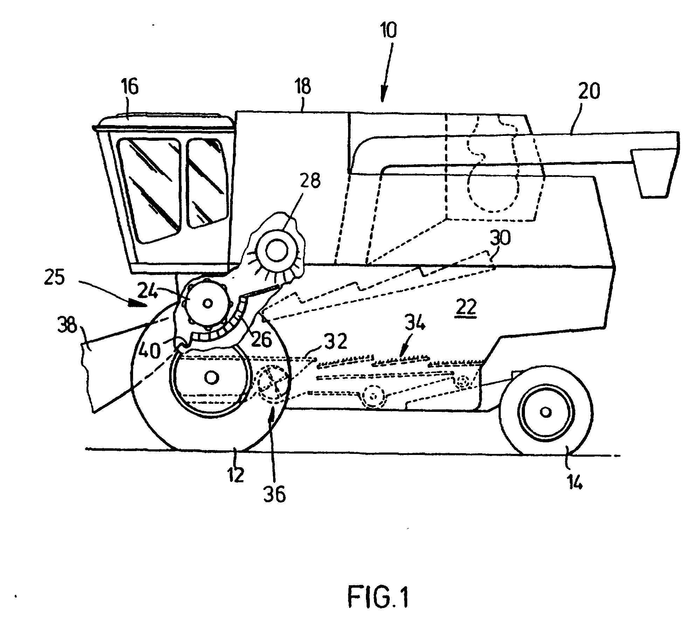

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. Anstatt eines Mähdreschers könnte ebenso eine stationäre Dreschmaschine, eine Versuchs-Dreschanlage oder dergleichen in Frage kommen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24 und einen Dreschkorb 26, die gemeinsam eine Dreschvorrichtung 25 bilden, und eine erfindungsgemäße Gutbearbeitungsvorrichtung 28 in seine großen und kleinen Bestandteile zerlegt wird. Auf daran anschließenden Schüttlern 30 sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

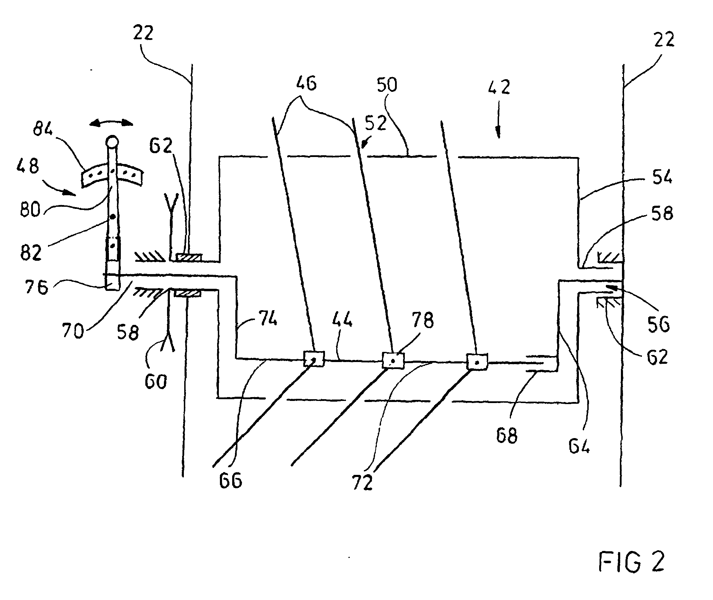

Die folgende Beschreibung richtet sich im wesentlichen auf Figur 2, die die erfindungsgemäße Gutbearbeitungsvorrichtung näher zeigt.

Die Gutbearbeitungsvorrichtung 28 enthält ein Rotorgehäuse 42, eine Kurbelachse 44, Mitnehmer 46 und eine Stellvorrichtung 48.

Das Rotorgehäuse 42 weist eine zylindrische, im Querschnitt vorzugsweise runde, Umfangswand 50 auf, in der sich in Reihen angeordnet eine der Anzahl der Mitnehmer 46 entsprechende Zahl von Öffnungen 52 befindet, die in der Axialrichtung des Rotorgehäuses 42 einen Abstand zueinander aufweisen. Diese Öffnungen dienen dem Durchtritt der Mitnehmer 46 und sind mit nicht gezeigten aber hinlänglich bekannten Lagerkugeln bestückt, die eine Schwenkbewegung der Mitnehmer 46 in der Umfangswand 50 ermöglichen. Stirnseitig sind an die Umfangswand 50 anschließende Stirnwände 54 vorgesehen, in deren Mitte jeweils ein Lager 56 in der Form einer Durchtrittsöffnung und ein Lagerhals 58 vorgesehen ist. An den in der Zeichnung linken Lagerhals 58 ist ein Antriebsrad 60 drehfest angeschlossen, über das und einen nicht gezeigten Riemen das Rotorgehäuse 42 in Drehung versetzt werden kann. Selbstverständlich kann der Antrieb auch auf andere Weise erfolgen, z. B. mittels eines Hydraulikmotors, einer Kette, einem Antriebsrad auf der Umfangswand 50 usw. Die Lager 56 dienen der Lagerung der Achse 44 in den Stirnwänden 54 oder der Durchführung durch diese. Das Rotorgehäuse 42 ist mittels der Lagerhälse 58 drehbar über nur angedeutete Lager 62 in dem Rahmen 22 des Mähdreschers 10 gelagert. Allerdings kann die Lagerung auch in anderer Weise erfolgen. Es ist zu erkennen, daß sich das Antriebsrad 60 außerhalb des Rahmens 22 und die zum selben Lagerhals 58 gehörende Stirnwand 54 innerhalb des Rahmens 22 befindet.

Die Achse 44 setzt sich aus einem ersten und zweiten Winkelhebel 64 und 66 zusammen, die in einer bestimmten Stellung gegenüber dem Rahmen 22 feststellbar sind. Diese Stellung kann verändert werden, wie dies bekannt ist, wenn entsprechende bekannte Vorrichtungen vorgesehen werden. Der erste Winkelhebel 64 ist bei der Ausführung gemäß Fig. 2 in dem rechten Lager 56 radial und axial gehalten, während er gegebenenfalls zur Änderung seiner Stellung darin drehbar ist. An dem dem Lager 56 abgelegenen Ende läuft der erste Winkelhebel 64 nach dem Ausführungsbeispiel von Fig. 2 als Hülse 68 aus, in der der zweite Winkelhebel 66 drehbar und axial beweglich gelagert ist. Der erste Winkelhebel 64 endet mit seinem die Hülse 68 tragenden Ende so nahe wie möglich an der zugehörigen Stirnwand 54, so daß sein außermittiger Abschnitt, der im wesentlichen aus der Hülse 68 besteht, relativ kurz ist. Der zweite Winkelhebel 66 setzt sich aus einem durch das Lager 56 nach außen tretenden Abschnitt 70 und einem die Mitnehmer 46 aufnehmenden Abschnitt 72 zusammen, die über einen radialen Abschnitt 74 miteinander verbunden sind. Der zweite Winkelhebel 66 ist gemäß dem Ausführungsbeispiel nach Fig. 2 mit dem freien Ende des Abschnitts 72 in der Hülse 68 und mit dem Abschnitt 70 in dem Lager 56 sowohl axial als auch drehbeweglich gelagert. Der Abschnitt 70 ist mit einer Kupplung 76 an die Stellvorrichtung 48 gelenkig angeschlossen, über die er und mit ihm der gesamte zweite Winkelhebel 66 gegen Drehung gesichert sind. Über die Länge des Abschnitts 72 verteilt befinden sich auf dem Abschnitt 72 mehrere Mitnehmerhalter 78, die auf diesem drehbar aber axial fest angebracht sind. Die Mitnehmerhalter 78 sind so ausgebildet, daß die Mitnehmer 46 in einer die Längsachse des Abschnitts 72 radial schneidenden Ebene schwenkbar sind. Jedem Mitnehmer 46 ist vorzugsweise ein eigener Mitnehmerhalter 78 zugeordnet.

Die Mitnehmer 46 sind vorzugsweise geradlinig ausgebildet, können allerdings auch in der Drehrichtung nachlaufend gestaltet sein. In jedem Fall sind die Mitnehmer 46 länger als der größte Abstand zwischen der Achse 44 und der Öffnung 52 in der Umfangswand 50. Die Mitnehmer 46 sind einenends in den Mitnehmerhaltern 78 und anderenends, nämlich mit dem freien Ende, in der Umfangswand 50 jeweils schwenkbar gelagert. Gemäß dieser Lagerung der Mitnehmer 46 und der Möglichkeit, den Abschnitt 74 der Achse 44 bzw. die gesamte Achse 44 axial zu verschieben, können die Mitnehmer 46 unterschiedliche Neigungen in Bezug auf die Umfangswand 50 einnehmen. Es ist erkennbar und im übrigen bekannt, daß aufgrund der exzentrischen Lage des Abschnitts 74 gegenüber dem Rotorgehäuse 42 die Mitnehmer 46 unterschiedlich weit über die Umfangswand 50 hinausragen und somit unterschiedlich stark in Eingriff mit dem zu fördernden Gut gelangen.

Unter Mitnehmer 46 werden normalerweise starre Finger verstanden. Allerdings ist auch die Verwendung federnd ausgebildeter Zinken möglich.

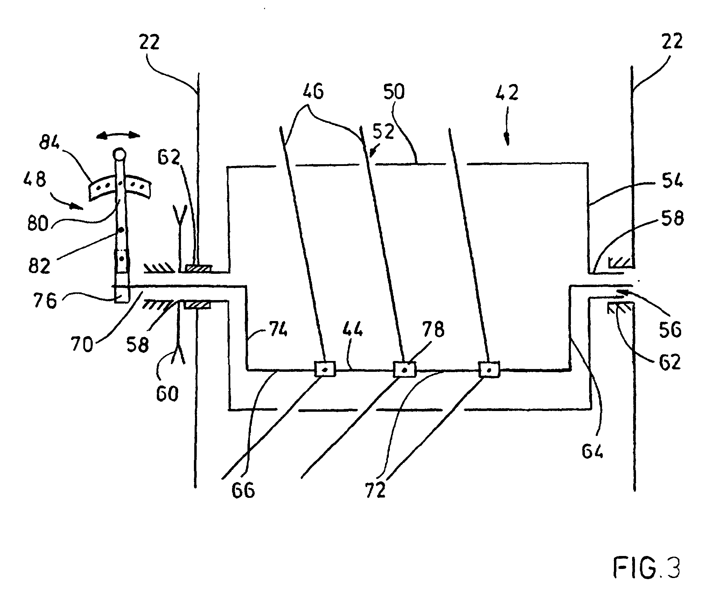

Figur 3 zeigt die Gutbearbeitungsvorrichtung 28 in einer zweiten Ausführungsform, die sich von der nach Figur 2 nur dadurch geringfügig unterscheidet, daß die beiden Winkelhebel 64 und 66 starr anstatt axial beweglich miteinander verbunden sind und der Winkelhebel 64 in dem Lagerhals 58 oder in dem Rahmen 22 axial beweglich gelagert ist. Demnach ist in diesem Ausführungsbeispiel die Achse 44 im wesentlichen aus einem vierfach gekröpften Träger gebildet, der als eine Einheit axial beweglich ist.

Die axiale Stellung des Abschnitts 74 bzw. der gesamten Achse 44 wird mittels der Stellvorrichtung 48 bestimmt, was stufenlos oder in Stufen erfolgen kann; jedenfalls wird die Stellung nur durch eine Neueinstellung geändert, während sie im Betrieb ungeändert bleibt. Die Stellvorrichtung 48 enthält einen Stellhebel 80, der in dem gezeigten Ausführungsbeispiel um eine Achse 82 kippbar und einenends an einem Stellsegment 84 festlegbar ist, während er anderenends gelenkig an der Kupplung 76 angreift. Wenn der Stellhebel 80 aus einer nicht gezeigten Raste oder dergleichen an dem Stellsegment 84 gelöst ist, kann er um die Achse 82 schwenken und die Kupplung 76 mitsamt der Achse 44, bzw. gegebenenfalls deren Abschnitt 74, axial verlagern. Auf diese Weise ändert sich folglich die Stellung der Mitnehmer 46. Selbstverständlich kann auch eine andere Stellvorrichtung 48, z. B. ein Stellmotor, ein Seilzug, ein Gestänge oder dergleichen manuell oder motorisch betriebenes Stellglied verwendet werden.

Wie bereits mit Blick auf Figur 2 deutlich wird, ist die Neigung der Mitnehmer 46 abhängig von dem Abstand zwischen dem Mitnehmerhalter 78 und der Öffnung 52. Dies bedeutet, daß während der Drehung der Umfangswand 50 um den Abschnitt 74, bei der die Mitnehmer 76 um den Abschnitt 74 mitdrehen, permanent eine Winkeländerung der Mitnehmer 46 stattfindet. Diese Winkeländerung wird von dem über die Umfangswand 50 hinausragenden Teil jedes Mitnehmers 46 auf das um ihn befindliche Gut übertragen und bewegt dieses, so daß darin enthaltene Körner ausgelöst werden können. Da die Winkeländerung in Richtung und Betrag bei einer gewählten Einstellung der Stellvorrichtung 48 konstant bleibt, findet je nach der Größe des axialen Versatzes auch eine Seitwärtsbewegung des Guts statt.

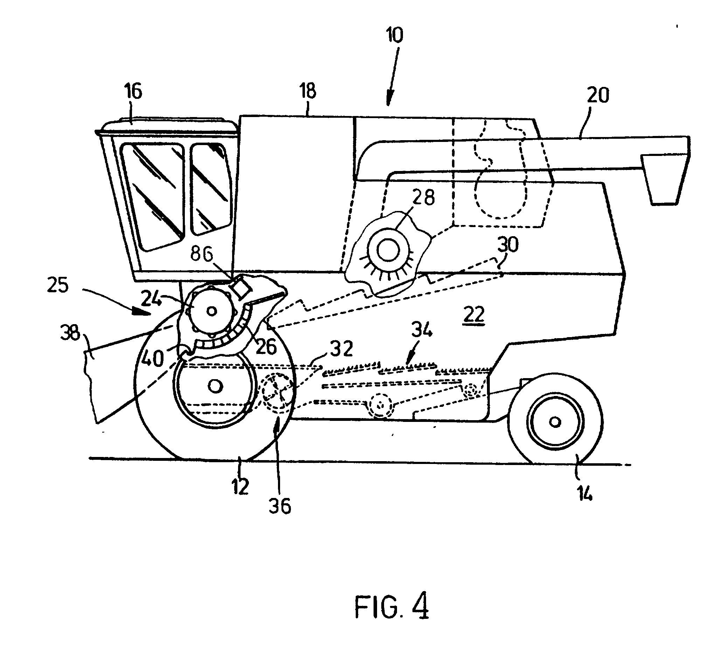

In den Figuren 4 bis 6 sind drei von vielen weiteren Anwendungsbeispielen der erfindungsgemäßen Gutbearbeitungsvorrichtung 28 gezeigt.

Danach befindet sich in Figur 4 die Gutbearbeitungsvorrichtung 28 oberhalb der Schüttler 30 und kann das darauf geförderte Gut aufrütteln oder seitlich bewegen.

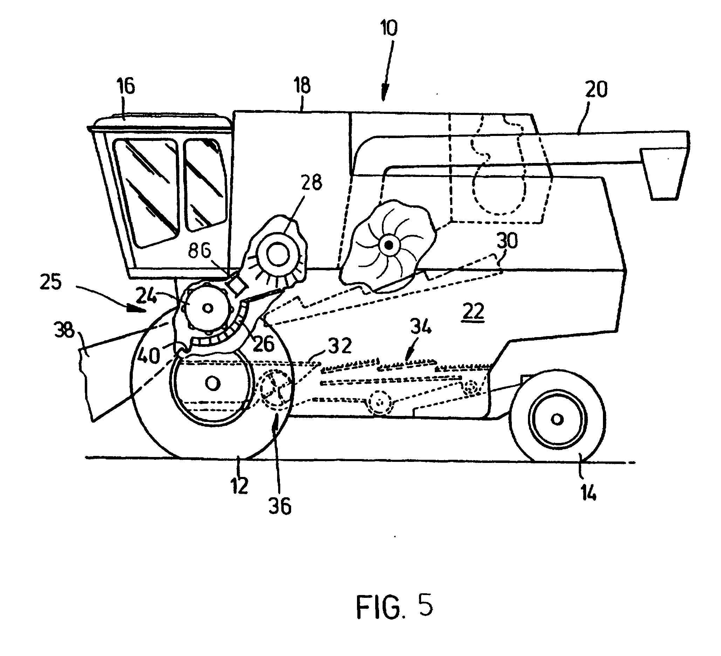

In Figur 5 befindet sich die Gutbearbeitungsvorrichtung 28 unmittelbar hinter einer Wendetrommel 86 der Erntemaschine 10 und wirkt bereits dort in der beschriebenen Weise auf das Gut ein. Bei der Darstellung nach Figur 1 tritt die Gutbearbeitungsvorrichtung 28 an die Stelle einer ansonsten vorgesehenen bekannten Wendetrommel.

Die besondere Funktion der Gutbearbeitungsvorrichtung 28 hinter der Wendetrommel 86 und vor den Schüttlern 30 bzw. in deren Aufnahmebereich ist darin zu sehen, daß das Fördergut sicher von der Wendetrommel 86 abgenommen wird und nicht mehr mit dieser dreht, was Wicklungen vermeiden hilft. Außerdem wird in dem Aufnahmebereich der Schüttler 30 der Abscheideprozeß von Restkörnern aus einer Strohmatte begonnen, so daß dort eine Gleichmäßigverteilung und Auflockerung sehr gewinnbringend ist. Mit der beanspruchten Anordnung der Gutbearbeitungsvorrichtung 28 in Bezug auf die Wendetrommel 86 bzw. deren Anordnung in Reihe kann auf die vielfältigsten Rahmenbedingungen eingegangen werden.

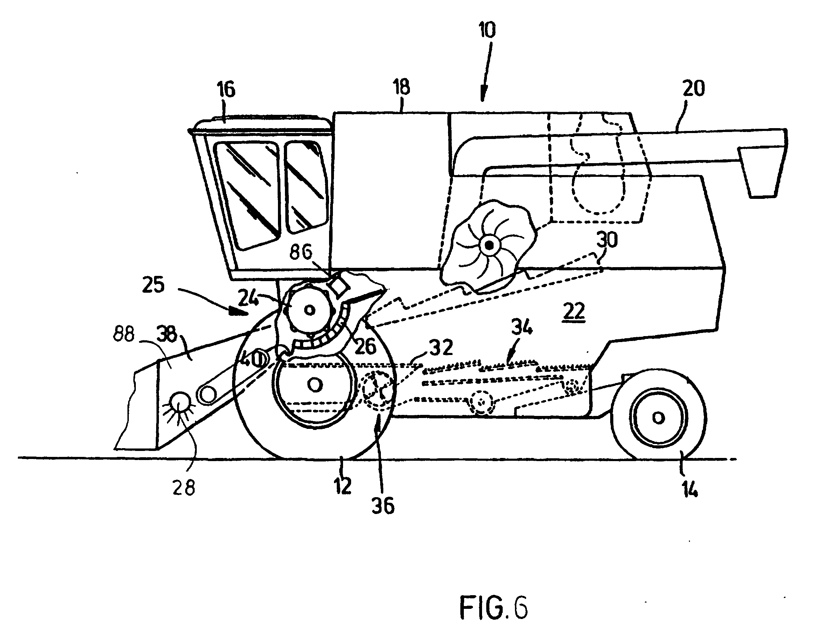

Figur 6 zeigt die Gutbearbeitungsvorrichtung 28 im Aufnahmebereich eines Schrägförderers 88, d. h. dort, wo das Fördergut von einem Schneidwerk, einer Pick-up, einem Maispflücker oder dergleichen zusammenführt und in die eigentliche Erntemaschine eingeführt wird. Die Mitnehmer 46 des dort ober- oder unterschlächtig drehenden Rotorgehäuses 42 ergreifen das Fördergut sicher, so daß es nicht zu Gutstaus kommt. Außerdem wird bei einer entsprechend geneigten Stellung der Mitnehmer 46 eine Seitwärtsbewegung und/oder Auflockerung des Förderguts erreicht.

Die Gutbearbeitungsvorrichtung 28 kann auch bereits in einer Einzugsschnecke eines Schneidwerks oder einer Pick-Up oder dergleichen verwendet werden, wo sie weniger auf die Zusammensetzung des Guts einwirkt, als mehr dieses seitwärts verlagert, um z. B. einer Ungleichverteilung am Hang entgegenzuwirken.

## Patentansprüche

1. Gutbearbeitungsvorrichtung (28) bestehend aus einem Rotorgehäuse (42), einer darin exzentrisch gelagerten Achse (44) und auf der Achse (44) drehbar gelagerten und durch das Rotorgehäuse (42) ragenden Mitnehmern (46), deren axiale Position veränderbar ist, **dadurch gekennzeichnet, daß** die Achse (44) in unterschiedlichen axialen Stellungen gegenüber dem Rotorgehäuse (42) festlegbar ist.

2. Gutbearbeitungsvorrichtung nach Anspruch 1, **dadurch gekennzeichnet, daß** sie unterschlächtig oder oberschlächtig fördernd antreibbar ist.

3. Gutbearbeitungsvorrichtung nach Anspruch 1 oder 2, **dadurch gekennzeichnet, daß** Mitnehmer (46) in mehreren umfangsmäßig verteilten und durch die Achse (44) verlaufenden Ebenen angeordnet sind, wobei die Mitnehmer (46) aufeinander folgender Ebenen eine unterschiedliche Neigung zu der Achse (44) aufweisen.

4. Gutbearbeitungsvorrichtung nach einem oder mehreren der vorherigen Ansprüche, **dadurch gekennzeichnet, daß** die Stellung der Mitnehmer (46) in radialer und/oder umfänglicher Richtung veränderbar ist

5. Gutbearbeitungsvorrichtung nach einem oder mehreren der vorherigen Ansprüche, **dadurch gekennzeichnet, daß** die Achse (44) aus zwei Winkelhebeln (64) und (66) besteht, wobei ein Abschnitt (74) des einen Winkelhebels (66) in einer Hülse (68) des anderen Winkelhebels (64) axial beweglich gelagert ist.

6. Gutbearbeitungsvorrichtung nach einem oder mehreren der vorherigen Ansprüche, **dadurch gekennzeichnet, daß** die Achse (44) einteilig ausgebildet und in dem Rotorgehäuse (42) oder in ortsfesten Lagern axial beweglich ist.

7. Gutbearbeitungsvorrichtung nach einem oder mehreren der vorherigen Ansprüche, **dadurch gekennzeichnet, daß** die Stellung der Achse (44) mittels einer Stellvorrichtung (48) veränderbar ist, die insbesondere mittels einer Steuervorrichtung betätigbar ist.

8. Gutbearbeitungsvorrichtung nach einem oder mehreren der vorherigen Ansprüche, **gekennzeichnet durch** ihre Verwendung in einer Einzugsschnecke einer Erntebergungsvorrichtung zur Seitwärtsförderung.

9. Gutbearbeitungsvorrichtung nach einem oder mehreren der vorherigen Ansprüche, **gekennzeichnet durch** ihre Verwendung oberhalb von Strohschüttlern (30) eines Mähdreschers.

10. Gutbearbeitungsvorrichtung nach einem oder mehreren der vorherigen Ansprüche, **gekennzeichnet durch** ihre Verwendung am Aufnahmeende von Schüttlern (30) im Abgabebereich einer Dreschvorrichtung (25) einer als Mähdrescher ausgebildeten Erntemaschine (10).

11. Gutbearbeitungsvorrichtung nach Anspruch 10, **dadurch gekennzeichnet, daß** zwischen der Dreschvorrichtung (25) und dem Aufnahmeende der Schüttler (30) eine Wendetrommel (86) vorgesehen ist und das Rotorgehäuse (42) mit den Fingern (46) derart angeordnet ist, daß sie das von der Wendetrommel (86) abgegebene Fördergut erfassen.

12. Gutbearbeitungsvorrichtung nach einem oder mehreren der vorherigen Ansprüche, **gekennzeichnet durch** ihre Verwendung anstelle einer Wendetrommel (86) im Abgabebereich einer Dreschvorrichtung (25) einer als Mähdrescher ausgebildeten Erntemaschine (10).

13. Gutbearbeitungsvorrichtung nach einem oder mehreren der vorherigen Ansprüche, **gekennzeichnet durch** ihre Verwendung im Gut-Annahmebereich eines Schrägförderers (88) einer insbesondere als Mähdrescher ausgebildeten Erntemaschine (10).

14. Gutbearbeitungsvorrichtung nach einem oder mehreren der vorherigen Ansprüche, **gekennzeichnet durch** eine Anordnung mehrerer Gutbearbeitungsvorrichtungen in Reihe mit gleichem oder wechselndem Drehsinn.

15. Gutbearbeitungsvorrichtung nach einem oder mehreren der vorherigen Ansprüche, **gekennzeichnet durch** eine unterschlächtig fördernde Anordnung stromabwärts einer Wendetrommel (86) und eine daran anschließende oberschlächtig fördernde Anordnung oberhalb von Schüttlern (30).

16. Gutbearbeitungsvorrichtung nach einem oder mehreren der vorherigen Ansprüche 1 bis 14, **gekennzeichnet durch** eine oberschlächtig fördernde Anordnung stromabwärts einer Wendetrommel (86) und eine daran anschließende unterschlächtig fördernde Anordnung oberhalb von Schüttlern (30).

## Claims

1. A crop processing device (28) consisting of a rotor housing (42), an axle (44) mounted eccentrically therein and entraining members (46), whose axial position can be varied, rotatably mounted on the axle (44) and projecting through the rotor housing (42), **characterized in that** the axle (44) can be fixed in different axial positions relative to the rotor housing (42).

2. A crop processing device according to claim 1, **characterized in that** it can be driven to convey undershot or overshot.

3. A crop processing device according to claim I or 2, **characterized in that** entraining members (46) are arranged in a plurality of planes distributed round the periphery and running through the axle (44), wherein the entraining members (46) of sequentially following planes have different inclinations to the axle (44).

4. A crop processing device according to one or more of the preceding claims, **characterized in that** the position of the entraining members (46) can be altered in the radial and/or peripheral direction.

5. A crop processing device according to one or more of the preceding claims, **characterized in that** the axle (44) consists of two cranked levers (64) and (66), wherein one section (74) of the one cranked lever (66) is mounted axially movably in a sleeve (68) of the other cranked lever (64).

6. A crop processing device according to one or more of the preceding claims, **characterized in that** the axle (44) is formed in one piece and is axially movable in the rotor housing (42) or in positionally fixed bearings.

7. A crop processing device according to one or more of the preceding claims, **characterized in that** the position of the axle (44) can be altered by means of an adjusting device which can in particular be actuated by means of a control device.

8. A crop processing device according to one or more of the preceding claims, **characterized by** use thereof in an intake auger of a harvesting apparatus for the sideways feeding.

9. A crop processing device according to one or more of the preceding claims, **characterized by** use thereof above straw shakers (30) of a combine harvester.

10. A crop processing device according to one or more of the preceding claims, **characterized by** use thereof at the receiving end of shakers (30) in the discharge region of a threshing device (25) of a harvesting machine (10) in the form of a combine harvester.

11. A crop processing device according to claim 10, **characterized in that** a turning drum (86) is provided between the threshing device (25) and the receiving end of the shaker (30) and the rotor housing (42) with the fingers (46) is so arranged that they engage the conveyed material delivered from the turning drum (86).

12. A crop processing device according to one or more of the preceding claims, **characterized by** use thereof instead of a turning drum (86) in the discharge region of threshing device (25) of a harvesting machine (10) in the form of a combine harvester.

13. A crop processing device according to one or more of the preceding claims, **characterized by** use thereof in the crop receiving region of an inclined conveyor (88) of a harvesting machine (10) in the form in particular of a combine harvester.

14. A crop processing device according to one or more of the preceding claims, **characterized by** an arrangement of a plurality of crop processing devices in series with the same or alternating senses of rotation.

15. A crop processing device according to one or more of the preceding claims, **characterized by** an undershot feeding arrangement downstream of a turning drum (86) and a following overshot feeding arrangement above shakers (30).

16. A crop processing device according to one or more of the preceding claims 1 to 14, **characterized by** an overshot feeding downstream of a turning drum (86) and a following undershot feeding arrangement above shakers (30).

## Revendications

1. Dispositif pour le traitement de récolte (28) constitué d'un caisson de rotor (42), d'un axe (44) qui y est monté sur paliers de manière excentrique et d'entraîneurs (46), dont la position axiale est variable, montés à rotation sur l'axe (44) et dépassant dans le caisson de rotor (42), **caractérisé en ce que** l'axe (44) peut être fixé dans différentes positions axiales par rapport au caisson de rotor (42).

2. Dispositif pour le traitement de récolte suivant la revendication 1, **caractérisé en ce qu'**il peut être entraîné de façon à transporter par le dessous ou à transporter par le dessus.

3. Dispositif pour le traitement de récolte suivant la revendication 1 ou 2, **caractérisé en ce que** des entraîneurs (46) sont disposés dans plusieurs plans répartis à la périphérie et passant par l'axe (44), les entraîneurs (46) de plans successifs présentant une inclinaison différente par rapport à l'axe (44).

4. Dispositif pour le traitement de récolte suivant une ou plusieurs des revendications précédentes, **caractérisé en ce que** la position des entraîneurs (46) est variable en direction radiale et/ou périphérique.

5. Dispositif pour le traitement de récolte suivant une ou plusieurs des revendications précédentes, **caractérisé en ce que** l'axe (44) est constitué de deux leviers angulaires (64) et (66), une section (74) d'un levier angulaire (66) reposant de manière permettant un mouvement axial dans une douille (68) de l'autre levier angulaire (64).

6. Dispositif pour le traitement de récolte suivant une ou plusieurs des revendications précédentes, **caractérisé en ce que** l'axe (44) est formé en une pièce et est mobile axialement dans le caisson de rotor (42) ou dans des paliers fixes.

7. Dispositif pour le traitement de récolte suivant une ou plusieurs des revendications précédentes, **caractérisé en ce que** la position de l'axe (44) est variable à l'aide d'un dispositif de réglage (48) qui peut en particulier être actionné à l'aide d'un dispositif de manoeuvre.

8. Dispositif pour le traitement de récolte suivant une ou plusieurs des revendications précédentes, **caractérisé par** son utilisation pour le transport latéral dans une vis sans fin d'alimentation d'un dispositif de collecte de récolte.

9. Dispositif pour le traitement de récolte suivant une ou plusieurs des revendications précédentes, **caractérisé par** son utilisation au-dessus des secoueurs de paille (30) d'une moissonneuse-batteuse.

10. Dispositif pour le traitement de récolte suivant une ou plusieurs des revendications précédentes, **caractérisé par** son utilisation à l'extrémité d'entrée de secoueurs de paille (30) dans la zone de sortie d'un dispositif batteur (25) d'une machine de récolte construite sous la forme d'une moissonneuse-batteuse (10).

11. Dispositif pour le traitement de récolte suivant la revendication 10, **caractérisé en ce qu'**un tambour de guidage (86) est prévu entre le dispositif batteur (25) et l'extrémité d'entrée des secoueurs (30) et **en ce que** le caisson de rotor (42) avec les doigts (46) est disposé de telle façon qu'ils saisissent le matériau rejeté par le tambour de guidage (86).

12. Dispositif pour le traitement de récolte suivant une ou plusieurs des revendications précédentes, **caractérisé par** son utilisation au lieu d'un tambour de guidage (86) dans la zone de sortie d'un dispositif batteur (25) d'une machine de récolte construite sous la forme d'une moissonneuse-batteuse (10).

13. Dispositif pour le traitement de récolte suivant une ou plusieurs des revendications précédentes, **caractérisé par** son utilisation dans la zone d'entrée de récolte d'un transporteur incliné (88), en particulier d'une machine de récolte construite sous la forme d'une moissonneuse-batteuse (10).

14. Dispositif pour le traitement de récolte suivant une ou plusieurs des revendications précédentes, **caractérisé par** une disposition en série de plusieurs dispositifs pour le traitement de récolte de sens de rotation identiques ou alternés.

15. Dispositif pour le traitement de récolte suivant une ou plusieurs des revendications précédentes, **caractérisé par** une disposition à transport par le dessous en aval d'un tambour de guidage (86) et une disposition à transport par le dessus s'y raccordant au-dessus de secoueurs (30).

16. Dispositif pour le traitement de récolte suivant une ou plusieurs des revendications précédentes 1 à 14, **caractérisé par** une disposition à transport par le dessus en aval d'un tambour de guidage (86) et une disposition à transport par le dessous s'y raccordant au-dessus de secoueurs (30).
